# EUROPÄISCHE PATENTSCHRIFT

(11) **EP 3 950 438 B1**
(45) Veröffentlichungstag und Bekanntmachung des Hinweises auf die Patenterteilung: **04.10.2023**
(21) Anmeldenummer: 21189161.9
(22) Anmeldetag: 02.08.2021
(51) Int. Cl.: B60R 22/18

(54) **UMLENKER MIT FEDERELEMENT**
DEFLECTOR WITH SPRING ELEMENT
DÉFLECTEUR POURVU D'ÉLÉMENT RESSORT

(30) Priorität: 06.08.2020 DE 102020120780
(43) Veröffentlichungstag der Anmeldung: 09.02.2022
(73) Patentinhaber: Autoliv Development AB, 447 83 Vårgårda (SE)
(72) Erfinder: KARDEL, Arno, 25348 Glückstadt (DE); MANNECK, Felix, 20251 Hamburg (DE)
(74) Vertreter: Feucker, Max Martin

(56) Entgegenhaltungen:
- EP-A1- 2 639 118
- US-A1- 2007 138 783
- US-A1- 2016 214 566

## Beschreibung

Die vorliegende Erfindung betrifft einen Umlenker zur Führung eines Gurtbandes in einem Fahrzeug, zumindest aufweisend einen Metallkörper mit einer am Fahrzeug anbringbaren Befestigungsöffnung und mit einem Gurtschlitz, und ein mit dem Metallkörper verbundenes Passstück aus Kunststoff, wobei der Metallkörper eine Aufnahme aufweist und auf dem Passstück ein zu der Aufnahme korrespondierender Eingriffsabschnitt ausgebildet ist, sodass der Eingriffsabschnitt in die Aufnahme eingreift, und wobei die Aufnahme eine dem Eingriffsabschnitt zugewandte Aufnahmeinnenfläche aufweist und der Eingriffsabschnitt eine der Aufnahme zugewandte Eingriffsoberfläche aufweist.

Üblicherweise werden solche Umlenker in einem Fahrzeug zur Führung eines Gurtbandes verwendet, welches an mindestens drei Stellen im Fahrzeug gehalten wird. Das Gurtband wird um den Körper eines Fahrzeuginsassen gelegt, sodass der Körper bei einer Bremsung des Fahrzeugs oder sonstigen Bewegung relativ zum Fahrzeug vom Gurtband zurückgehaltengehalten wird. Dabei wird das Gurtband unter Anderem von dem Umlenker aufgespannt und in einer vorgegebenen Position gehalten, sodass das Gurtband in einem angelegten Zustand den Körper in mehreren verschiedenen Bereichen zurückhält.

Ein gattungsgemäßer Umlenker ist dabei am Fahrzeug befestigt und stellt zur Führung des Gurtbandes einen Gurtführungsschlitz bereit, welcher das Gurtband vollständig umschließt oder zumindest verliersicher umgibt. Dabei wird das Gurtband beispielsweise bei einem Anlegen durch den Fahrzeuginsassen oder bei einem Bremsvorgang entlang des Gurtführungsschlitzes bewegt, sodass es zu einer Reibung des Gurtbandes am Umlenker, insbesondere im Bereich des Gurtschlitzes, kommt. Um eine ausreichende Rückhaltewirkung bereitzustellen, darf der Umlenker im Rahmen der zu erwartenden Kräfte nicht versagen. Aus diesem Grund wird meist ein Metallkörper verwendet, welcher zumindest eine Befestigungsöffnung zur Anbringung an dem Fahrzeug aufweist und gleichzeitig den Gurtschlitz bereitstellt. Zur Gewichtsreduktion und aus ästhetischen Gründen, weist der Umlenker häufig ein mit dem Metallkörper verbundenes Passstück (englisch: adapter) aus Kunststoff auf. Bei der Fertigung des Metallkörpers werden herstellungsbedingt höhere Toleranzen angesetzt als bei dem Passstück aus Kunststoff. Folglich ist das Metallteil nicht immer passgenau gefertigt, sodass es bei der Montage zu dem Umlenker zu Defekten kommen kann und im Betrieb des Umlenkers zu Klappergeräuschen zwischen dem Passstück und dem Metallkörper.

Ein Umlenker mit den vorgenannten Merkmalen ist beispielsweise aus DE 10 2004 050 154 B3 bekannt. Dabei greift ein Eingriffsabschnitt des Passstückes in den Gurtschlitz des Metallkörpers ein, sodass in dem Bereich eine formschlüssige Verbindung zwischen dem Metallkörper und dem Passstück entsteht. Der Umlenker wird mit einer Befestigungsöffnung an dem Fahrzeug befestigt. Um durch ein Anschlagen des Umlenkers an dem Fahrzeug entstehende Klappergeräusche zu verhindern, weist das Passstück auf der dem Fahrzeug zugewandten Rückseite mindestens einen angeformten Federarm auf, welcher sich gegen das Fahrzeug abstützt, sodass im Betrieb erzeugte Erschütterungen keine Klappergeräusche verursachen. Ein weiterer Umlenker ist zudem aus EP 2 639 118 A1 bekannt.

Nachteilig bei aus einem Metallkörper und dem Passstück zweiteilig ausgebildeten Umlenkern ist jedoch, dass es, bei einem Gleiten des am Gurtführungsschlitz anliegenden Gurtbandes oder durch im Betrieb des Fahrzeugs auftretende Erschütterungen, zwischen dem Passstück und dem Metallkörper zu Klappergeräuschen kommt. Insbesondere in Bereichen in dem sich eine formschlüssige Verbindung ausbildet, beispielsweise durch einen in den Metallkörper eingreifenden Eingriffsabschnitt, kann es zu Klappergeräuschen kommen. Weiterhin kann es bei der Fertigung des Passstückes oder des Metallkörpers herstellungsbedingt zu nicht genau zueinander passenden Eingriffsflächen kommen. Dabei wird häufig der Metallkörper, welcher insbesondere ein Metallstanzteil ist, bei der weiteren Verarbeitung gebogen, gerollt oder zusätzlich gestanzt. Der Metallkörper weist bei der Fertigung meist höhere Toleranzgrenzen auf. Daher liegen das Passstück und der Metallkörper, in dem Bereich in dem der Formschluss ausgebildet werden soll, oft nicht gewünscht aneinander und es kommt zu Klappergeräuschen, insbesondere zwischen den beiden Bauteilen.

Aufgabe der vorliegenden Erfindung ist es, die mit Bezug zum Stand der Technik geschilderten Nachteile zu beseitigen und einen verbesserten Umlenker zur Führung eines Gurtbandes in einem Fahrzeug bereitzustellen.

Gelöst wird die Aufgabe durch einen Umlenker mit den Merkmalen des unabhängigen Anspruchs. Vorteilhafte Weiterbildungen des Umlenkers sind in den abhängigen Ansprüchen und in der Beschreibung angegeben, wobei einzelne Merkmale der vorteilhaften Weiterbildungen in technisch sinnvoller Weise miteinander kombinierbar sind.

Gelöst wird die Aufgabe insbesondere durch einen Umlenker mit den eingangs genannten Merkmalen, wobei der Eingriffsabschnitt mindestens ein an der Aufnahmeinnenfläche anliegendes Federelement aufweist.

Zur Anbringung im Fahrzeug wird der Umlenker mit einem in die Befestigungsöffnung des Metallkörpers einbringbaren Befestigungsmittel am Fahrzeug fixiert. Zudem ist ein Gurtband in dem Gurtschlitz anordbar, sodass das Gurtband im Gurtschlitz gehalten wird. In einem vormontierten Zustand greift der Eingriffsabschnitt des Passstücks in die Aufnahme des Metallkörpers ein, sodass beide Teile formschlüssig miteinander verbunden sind und den Umlenker bilden. Die Aufnahme des Metallkörpers weist zudem eine Aufnahmeinnenfläche auf, welche die Kontur eines Eingriffsabschnittes des Passstücks nachbildet. Eine Eingriffsoberfläche des Eingriffsabschnitts ist folglich in der Aufnahme angeordnet und kann an der Aufnahmeinnenfläche angelegt sein. Vorzugsweise liegt die Eingriffsoberfläche zumindest teilweise, am bevorzugtesten vollständig an der Aufnahmeinnenfläche an. Auf diese Weise wird eine formschlüssige Verbindung zwischen dem Metallkörper und dem Passstück bewirkt. Dabei können weitere Verbindungen zwischen dem Metallkörper und dem Passstück ausgebildet werden, insbesondere auch durch Befestigen des Umlenkers am Fahrzeug.

Der Eingriffsabschnitt weist erfindungsgemäß mindestens ein Federelement auf, welches an der Aufnahmeinnenfläche anliegt. Dabei steht das mindestens eine Federelement erfindungsgemäß unter Spannung und drückt gegen die Aufnahmeinnenfläche. Folglich wird durch das mindestens eine Federelement eine Vorspannkraft vom Passstück auf den Metallkörper im Bereich der Aufnahme ausgeübt. Auf diese Weise können beispielsweise herstellungsbedingte Oberflächenfehler im Bereich der Aufnahmeinnenfläche durch das mindestens eine Federelement ausgeglichen werden, wobei das mindestens eine Federelement auch bei einem vorhandenen Spiel zwischen Metallkörper und Passstück an der Aufnahmeinnenfläche anliegt. Folglich tragen die Federelemente dazu bei, herstellungsbedingte Fertigungstoleranzen an dem Metallkörper auszugleichen.

Zudem kann durch das Anliegen des mindestens einen Federelements an der Aufnahmeinnenfläche eine unkontrollierte Bewegung zwischen dem Metallkörper und dem Passstück verhindert werden. Somit wird ein Anschlagen insbesondere der Aufnahmeinnenfläche und der Eingriffsoberfläche durch das mindestens eine Federelement unterbunden. Weiterhin kann das mindestens einen Federelement vorteilhaft bei der Montage zum Umlenker Defekte im Bereich der Aufnahme verhindern. Kommt es durch Erschütterungen im Fahrbetrieb oder durch ein Gleiten des Gurtbandes im Gurtschlitz im Bereich der Aufnahme zu einer Relativbewegung zwischen den beiden Bauteilen des Umlenkers, wird zusätzlich durch das mindestens eine anliegende Federelement ein Klappergeräusch verhindert beziehungsweise eine angeregte Vibration gedämpft. Durch das mindestens eine Federelement kann auch in anderen in Kontakt liegenden Bereichen zwischen Metallkörper und Passstück ein Klappergeräusch verhindert werden.

Bei dem Umlenker handelt es sich insbesondere um ein zweiteiliges Bauteil, welches aus dem Metallkörper und dem Passstück gebildet wird. Der Metallkörper ist vorzugsweise ein Metallstanzteil. Ein solches Metallstanzteil ist vorteilhaft kostengünstig herstellbar und kann vorteilhaft den Hauptanteil der im Lastfall wirkenden Kräfte ohne Versagungserscheinungen aufnehmen.

Bei dem Passstück handelt es sich vorzugsweise um ein einteilig ausgebildetes Kunststoffteil. Zudem weist das Passstück einen Eingriffsabschnitt, insbesondere als Vorsprung ausgebildet auf, sodass der Eingriffsabschnitt in einer auf den Metallkörper ausgebildeten Aufnahme eingreift. Das Passstück ist vorzugsweise in weiteren Bereichen korrespondierend zu dem Metallstanzteil ausgebildet. Zudem sind weitere Verbindungen, beispielsweise Cliphaken, zum Befestigen des Passstückes am Metallstanzteil vorgesehen, sodass der Umlenker ein vormontiertes eigenes Bauteil bildet.

Dabei kann das Passstück insbesondere einen unteren und einen oberen Abschnitt aufweisen, wobei auf dem oberen Abschnitt im Bereich des Gurtschlitzes des Metallkörpers ein Gurtführungsabschnitt ausgebildet sein kann, so dass das Gurtband von dem Passstück geführt wird. Insbesondere kann das Passstück einen oder den gesamten Bereich des Gurtschlitzes nachbilden. Der untere Abschnitt des Passstückes ist vorzugsweise über zwei Verbindungsarme mit dem oberen Abschnitt verbunden, sodass der untere Abschnitt und der obere Abschnitt verbunden sind und das Passstück als einteiliges Kunststoffteil ausgebildet ist. Der untere Abschnitt des Passstückes weist insbesondere den Eingriffsvorsprung auf.

Weiterhin kann das Passstück weitere Verkleidungskonturen aufweisen, sodass im montierten Zustand des Umlenkers im Fahrzeug der Metallkörper nicht sichbar ist. Im montierten Zustand des Umlenkers im Fahrzeug ist vorzugsweise der obere Abschnitt zumindest zum Teil in die Befestigungsöffnung des Metallkörpers eingelassen, wobei das Befestigungsmittel, mit welchem der Umlenker an dem Fahrzeug anbringbar ist, vorzugsweise durch das Passstück durchführbar ist und an dem Passstück anliegen kann.

Bei dem mindestens einen an der Aufnahmeinnenfläche anliegenden Federelement kann es sich beispielsweise um einen federnden Abschnitt des Eingriffsabschnitts handeln, der insbesondere im unmontierten Zustand des Umlenkers vom Eingriffsabschnitt beziehungsweise der Eingriffsoberfläche absteht beziehungsweise von dieser vorsteht. Das Federelement ist vorzugsweise aus demselben Material gefertigt wie das Passstück. Besonders bevorzugt ist das mindestens eine Federelement ebenfalls aus Kunststoff und besitzt eine gewisse Biegsamkeit. Weiterhin kann das mindestens eine Federelement an dem Eingriffsabschnitt angeformt, angebracht oder aufgelegt sein, sodass es im vormontierten Zustand des Umlenkers gegen das Passstück drückt. Auf diese Weise kann das mindestens eine Federelement Klappergeräusche im Umlenker unterbinden, herstellungsbedingte Fehler ausgleichen und Defekte bei der Montage zu dem Umlenker, insbesondere durch Verbinden des Metallkörpers mit dem Passstück, vermeiden.

In einer Ausführungsform stellt das mindestens eine Federelement eine gegen die Aufnahmeinnenflächen wirkende Federkraft bereit. Die Federkraft ist insbesondere abhängig von der Auslenkung des mindestens einen Federelements sowie den Materialeigenschaften des Passstücks. In dem an die Aufnahmeinnenfläche anliegenden Zustand befindet sich das mindestens eine Federelement vorzugsweise im elastischen Bereich. Abhängig von der Federkraft kann vorteilhaft eine gewünschte Vorspannung eingestellt werden, sodass Klappergeräusche besonders gut unterbunden werden können. Vorzugsweise nimmt die Federkraft bei einer Auslenkung des mindestens einen Federelements weg von der Aufnahmeinnenfläche zu, sodass ein unkontrolliertes Anschlagen der Aufnahmeinnenfläche an die Eingriffsoberfläche verhindert werden kann. Kommt es aufgrund einer Anregung des Umlenkers zu einer Auseinanderbewegung des Metallkörpers und des Passstücks im Bereich der Aufnahme, kann eine Auslenkung des mindestens einen Federelements in Richtung der Aufnahmeinnenfläche vorteilhaft einen unkontrollierten Wegfall der Vorspannkraft verhindern.

In einer anderen vorteilhaften Ausführungsform der Erfindung ist vorgesehen, dass das mindestens eine Federelement einteilig mit dem Passstück ausgebildet ist. Das mindestens eine Federelement kann beispielsweise durch einen vorstehenden Abschnitt am Passstück selbst ausgebildet sein. Dabei ist das mindestens eine Federelement biegsam und steht von dem Passstück im unmontierten Zustand des Umlenkers vor. Bei der Herstellung des Passstückes beziehungsweise der Montage des Umlenkers kann vorteilhaft auf zusätzliche Montage- beziehungsweise Herstellungsschritte verzichtet werden. Weiterhin ist die Position des mindestens einen Federelements an dem Eingriffsabschnitt vorteilhaft vorgebbar.

In einer weiteren vorteilhaften Ausführungsform der Erfindung ist vorgesehen, dass das Passstück mindestens zwei und entlang des Gurtschlitzes versetzte Federelemente aufweist, sodass das Passstück mindestens an zwei versetzten Stellen eine Federkraft auf die Aufnahmeinnenfläche bereitstellbar ist. Der zu dem Gurtband passend ausgeformte insbesondere längliche Gurtschlitz, ist dabei parallel zu der vorzugsweise ebenfalls länglich ausgebildeten Aufnahme des Passstücks ausgerichtet. Durch ein Passstück, welches mindestens zwei Federelemente aufweist, kann vorteilhaft eine einseitige Belastung beziehungsweise Relativbewegung zwischen dem Passstück und dem Metallkörper verhindert werden. Zudem kann im Bereich der Aufnahme ein Klappergeräusch besser verhindert werden, lokale begrenzte Produktionsfehler durch die mindestens zwei Federelemente ausgeglichen werden und insgesamt höhere Toleranzgrenzen festgelegt werden. Die versetzte Anordnung der mindestens zwei Federelemente ermöglicht das Verhindern der Klappergeräusche und das Ausgleichen der Produktionsfehler vorteilhaft gleichmäßig und in verschiedenen Bereichen der Aufnahme des Metallkörpers.

In einer weiteren vorteilhaften Ausführungsform der Erfindung ist vorgesehen, dass die Eingriffsoberfläche mindestens eine Öffnung aufweist und das mindestens eine Federelement zumindest zum Teil in der Öffnung angeordnet ist. Vorzugsweise weist die Eingriffsoberfläche für jedes Federelement eine Öffnung auf. Die Anordnung des mindestens einen Federelements in der mindestens einen Öffnung ermöglicht vorteilhaft, dass das mindestens eine Federelement bei dem Anliegen an der Aufnahmeinnenfläche der Eingriffsoberfläche nicht vorsteht, sondern mit einem an der Aufnahmeinnenfläche anliegenden Bereich mit der Eingriffsoberfläche im Bereich der Öffnung fluchtet. Auf diese Weise ist vorteilhaft ein Anliegen der Aufnahmeinnenfläche an der Eingriffsoberfläche möglich, wobei gleichzeitig eine auf die Aufnahmeinnenfläche wirkende Federkraft durch das mindestens eine Federelement bereitgestellt wird.

In einer weiteren vorteilhaften Ausführungsform der Erfindung ist vorgesehen, dass das mindestens eine Federelement in Richtung der Aufnahmeinnenfläche auslenkbar ist und in Richtung der mindestens einen Öffnung einlenkbar ist. Das mindestens eine an der Aufnahmeinnenfläche anliegende Federelement kann vorteilhaft innerhalb der Öffnung bewegt werden. Auf diese Weise kann das mindestens eine Federelement besonders effizient Klappergeräusche verhindern beziehungsweise Unebenheiten der Aufnahmeinnenfläche in Folge von Produktionsfehlern ausgleichen. Beispielsweise kann es bei zwei oder mehreren Federelementen, welche jeweils in einer Öffnung angeordnet sind, in unterschiedlichen Bereichen zu einem Kontakt von Aufnahmeinnenfläche und Eingriffsoberfläche kommen, sodass eines der Federelemente eingelenkt ist, und wohingegen in einem anderen Bereich ein anderes Federelement ausgelenkt ist und der Eingriffsoberfläche vorsteht, sodass die Eingriffsoberfläche nicht mit der Aufnahmeinnenfläche in Kontakt steht. Durch mindestens ein auslenkbares und einlenkbares Federelement ist somit ein flexibles und vorteilhaftes Anliegen des mindestens einen Federelementes an der Aufnahmeinnenfläche des Metallkörpers bewirkt werden.

In einer anderen vorteilhaften Ausführungsform ist vorgesehen, dass eine der Aufnahmeinnenfläche abgewandte Oberfläche des Metallkörpers eine den Gurtschlitz begrenzende Gurtauflagefläche bildet. Auf diese Weise kann eine Führung des Gurtbandes durch den besonders stabilen Metallkörper erfolgen. Weiterhin kann die Führung durch das mindestens eine Federelement, welches insbesondere auf der gegenüberliegenden Seite der Gurtauflagefläche angeordnet ist, vorteilhaft nahe am Ursprung eines Klappergeräusches, insbesondere hervorgerufen in Folge von einem Gleiten des Gurtbandes an dem Gurtschlitz, verhindern werden. Die durch ein Gleiten angeregten Vibrationen können somit besonders effizient und effektiv durch das mindestens eine Federelement gedämpft werden.

In einer weiteren vorteilhaften Weiterbildung ist vorgesehen, dass durch die Eingriffsoberfläche mindestens zwei Eingriffsrippen ausgebildet sind, wobei die mindestens zwei Eingriffsrippen eine Kontur der Aufnahmeinnenfläche nachbilden, sodass die mindestens zwei Eingriffsrippen an die Aufnahmeinnenfläche angelegt sind. Die mindestens zwei Eingriffsrippen sind vorzugsweise über die Eingriffsoberfläche verteilt, insbesondere regelmäßig verteilt, angeordnet. Die mindestens zwei Eingriffsrippen sind vorzugsweise nicht direkt im Bereich des mindestens einen Federelementes angeordnet, sondern entlang des Gurtschlitzes versetzt. Auf diese Weise kann vorteilhaft ein seitliches Verschieben des Metallkörpers zu dem Passstück verhindert werden, wobei das mindestens eine Federelement seitlich gegen eine der mindestens zwei vorstehenden Eingriffsrippen trifft. Zudem kann die Aufnahmeinnenfläche vorteilhaft auf den mindestens zwei Eingriffsrippen anliegen. Durch die mindestens zwei Eingriffsrippen kann vorteilhaft ein Anliegen des Metallkörpers an dem Passstück im Bereich der Aufnahme vorgegeben werden. Weiterhin kann durch die mindestens zwei Eingriffsrippen eine maximale Einlenkung des mindestens einen Federelementes in Richtung des Eingriffsabschnitts vorgegeben werden, da die Aufnahmeinnenfläche im Bereich der mindestens zwei Eingriffsrippen zur Anlage an den die Eingriffsoberfläche bindenden Eingriffsrippen kommt. Für Montagezwecke des Umlenkers ist ein Einlenken des mindestens einen Federelementes über die vorstehenden Eingriffsrippen in Richtung des Eingriffsabschnittes möglich. Wenn das mindestens eine Federelement in einer Öffnung angeordnet ist, ist zu Montagezwecken ebenfalls möglich, dass das mindestens eine Federelement über die Öffnung hinaus in einen inneren Bereich der Öffnung eingelenkt wird. Die mindestens zwei Eingriffsrippen können somit vorteilhaft den Bereich der Anlage des Metallkörpers und des Passstückes im Bereich der Aufnahme vorgeben.

In einer weiteren Ausführungsform ist vorgesehen, dass die Aufnahme durch einen sich in Richtung des Gurtschlitzes erstreckenden Rollabschnitt ausgebildet ist. Da es sich vorzugsweise bei dem Metallkörper um ein Metallstanzteil handelt, kann eine Aufnahme vorteilhaft durch ein Biegen beziehungsweise Rollen eines Bereichs des Metallstanzteils ausgebildet werden. Der Eingriffsabschnitt des Passstücks ist entsprechend passend zu dem sich in Richtung des Gurtschlitzes erstreckenden Rollabschnitts ausgebildet. Auf diese Weise kann vorteilhaft eine Drehsicherung des Metallkörpers zu dem Passstück bereitgestellt werden. Weiterhin ist durch einen Rollabschnitt vorteilhaft eine formschlüssige Verbindung ausbildbar. Zudem kann vorteilhaft durch eine der Aufnahmeinnenfläche abgewandte Oberfläche des Rollabschnitts die Gurtauflagefläche ausgebildet werden.

In einer weiteren vorteilhaften Ausführungsform der Erfindung ist vorgesehen, dass die maximale Auslenkung des mindestens einen Federelements durch die Eingriffsoberfläche und/oder durch die Eingriffsrippen vorgegeben ist. Bei dem montierten Umlenker kommt vorzugsweise zu einem zumindest teilweisen Anliegen der Aufnahmeinnenfläche an der Eingriffsoberfläche oder einem oder mehreren der mindestens zwei die Eingriffsoberfläche bildenden Eingriffsrippen. Kommt es zu einer Relativbewegung zwischen Eingriffsoberfläche und Aufnahmeinnenfläche, kann das mindestens eine Federelement gewünscht weiterhin eine Spannung durch das Anliegen an der Aufnahmeinnenfläche zwischen dem Metallkörper und dem Passstück bewirken. Eine maximale Auslenkung des Federelementes in Richtung der Eingriffsoberfläche und somit die maximal wirkende Federkraft des mindestens einen Federelementes kann vorteilhaft durch die Ausgestaltung der Eingriffsrippen beziehungsweise der Eingriffsoberfläche vorgegeben werden.

Die Erfindung sowie das technische Umfeld werden im Folgenden anhand der Figuren beispielshaft erläutert. Es zeigen schematisch:
- Figur 1:: einen Metallkörper eines erfindungsgemäßen Umlenkers,
- Figur 2:: ein Passstück eines erfindungsgemäßen Umlenkers,
- Figur 3:: einen erfindungsgemäßen Umlenker, welcher aus dem Metallkörper gemäß Figur 1 und dem Passstück gemäß Figur 2 montiert ist,
- Figur 4:: einen erfindungsgemäßen Umlenker mit einem Schnitt,
- Figur 5:: ein Passstück mit einem Schnitt,
- Figur 6:: einen erfindungsgemäßen Umlenker in einer Schnittdarstellung gemäß Figur 4 und
- Figur 7:: ein Passstück in einer Schnittdarstellung gemäß Figur 5.

Der in den Figuren dargestellte Umlenker 1 umfasst einen Metallkörper 2 mit einer Befestigungsöffnung 3 und einem Gurtschlitz 4 sowie ein mit dem Metallkörper 2 verbundenes Passstück 5. Dazu weist der als Metallstanzteil ausgebildete Metallkörper 2 eine Aufnahme 6 mit einer Aufnahmeinnenfläche 8 auf. Die Aufnahme 6 wird durch einen Rollabschnitt 15 gebildet. Ein Eingriffsabschnitt 7 des Passstücks 5 weist eine Eingriffsoberfläche 9 auf, wobei der Eingriffsabschnitt 7 und die Eingriffsoberfläche 9 entsprechend zu der Aufnahme 6 und der Aufnahmeinnenfläche 8 ausgebildet sind, so dass der Eingriffsabschnitt 7 in der Aufnahme 6 anordbar ist und das Passstück 5 mit dem Metallkörper 2 verbindbar ist. Auf der Eingriffsoberfläche 9 sind zwei Öffnungen 11 ausgebildet, in welchen zwei einteilig mit dem Passstück 5 ausgebildete Federelemente 10 angeordnet sind. Die Federelemente 10 liegen gegen die Aufnahmeinnenfläche 8 an. Auf der der Aufnahmeinnenfläche 8 abgewandten Seite des Rollabschnitts 15 ist durch die Oberfläche 12 des Metallkörpers 2 eine Gurtauflagefläche 13 ausgebildet. Weiterhin weist die Eingriffsoberfläche 9 fünf Eingriffsrippen 14 auf, welche ebenfalls entsprechend zu der Aufnahme 6 ausgebildet sind, so dass die fünf Eingriffsrippen 14 an der Aufnahmeinnenfläche 8 anliegen. Der Metallkörper 2 besitzt zudem oberhalb der Befestigungsöffnung 3 einen Klippvorsprung 23.

Das Passstück 5 ist durch einen oberen Abschnitt 18 und einen unteren Abschnitt 19 ausgebildet. Der obere Abschnitt 18 ist entsprechend zu der Befestigungsöffnung 3 des Metallkörpers 2 ausgenommen, so dass ein Befestigungsmittel entsprechend durch das Passstück 5 führbar ist. Zudem weist der obere Abschnitt 18 einen in den Gurtschlitz 4 des Metallkörpers 2 eingreifenden Gurtabschnitt 20 auf. Der obere Abschnitt 18 des Passstücks 5 ist über zwei jeweils seitlich neben der Befestigung der nachgebildeten Befestigungsöffnung 3 angeordneten Verbindungsarme 17 mit den unteren Abschnitten 19 verbunden. Der untere Abschnitt 19 weist den Eingriffsabschnitt 7 mit den Federarmen 10 und den Eingriffsrippen 14 auf. Seitlich von dem unteren Abschnitt 19 abgehend ist zusätzlich an dem Passstück 5 eine Verkleidungskontur 21 ausgebildet. Weiterhin weist das Passstück 5 einen Klipphaken 16 auf, welcher den Klippvorsprung 23 des Metallkörpers 2 im montierten Zustand des Umlenkers 1 hintergreift. Weiterhin besitzt das Passstück 5 rückseitig drei Abstützelemente 24 und drei in Richtung der Befestigungsöffnung 3 gerichtete weitere Klipphaken 22 auf.

Das Passstück 5 wird über den Klipphaken 16, welcher oberhalb der Befestigungsöffnung 3 den Klippvorsprung 23 des Metallkörpers 2 hintergreift, an dem Metallkörper 2 befestigt. Weiterhin hintergreifen die drei weiteren Klipphaken 22 des Passstücks 5 den Metallkörper 2 im Bereich der Befestigungsöffnung 3. Dabei stützen sich die drei weiteren Klipphaken 22 von innen gegen die Befestigungsöffnung 3 des Metallkörpers 2 seitlich ab und hintergreifen über den Umfang versetzt den Metallkörper 2. Die weiteren Klipphaken 22 sind über den Umfang der Befestigungsöffnung 3 regelmäßig verteilt angeordnet. Die drei rückseitig angeordneten Abstützelemente 24 des Passstücks 5 stützen sich gegen einen Teil des Fahrzeuges ab und spannen den Umlenker 1 zusätzlich zu einem in die Befestigungsöffnung 3 einbringbaren Befestigungsmittel gegen den Teil des Fahrzeugs vor. Auf diese Weise kann ein unkontrolliertes Anschlagen des Umlenkers 1 an das Fahrzeug verhindert werden. Die drei Abstützelementen 24 sind dabei zu den weiteren Klipphaken 22 versetzt angeordnet und über den Umfang der Befestigungsöffnung 3 gleichmäßig verteilt, wodurch eine vorteilhaft gleichmäßige Verbindung beziehungsweise Abstützung des Umlenkers 2 bewirkt wird.

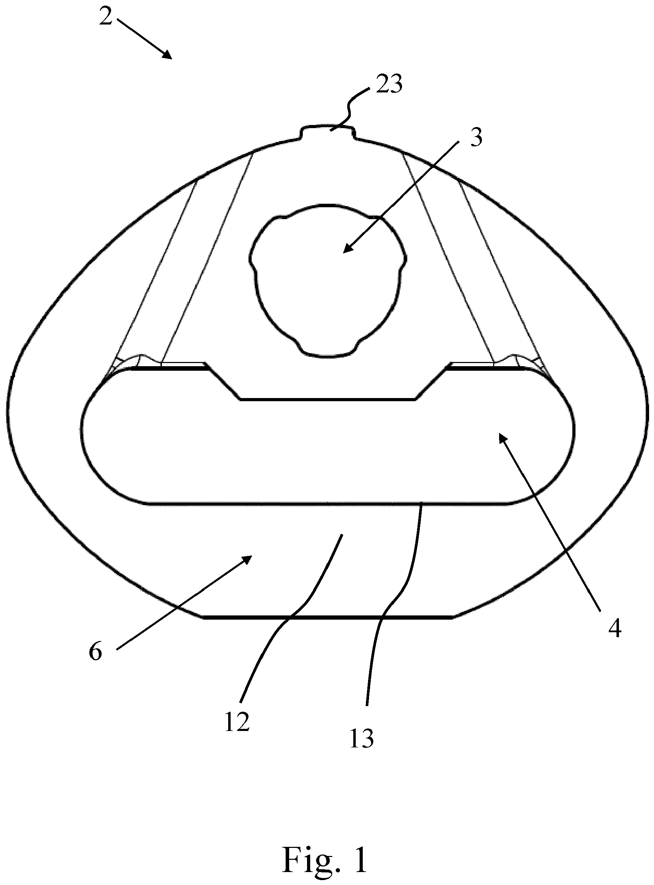

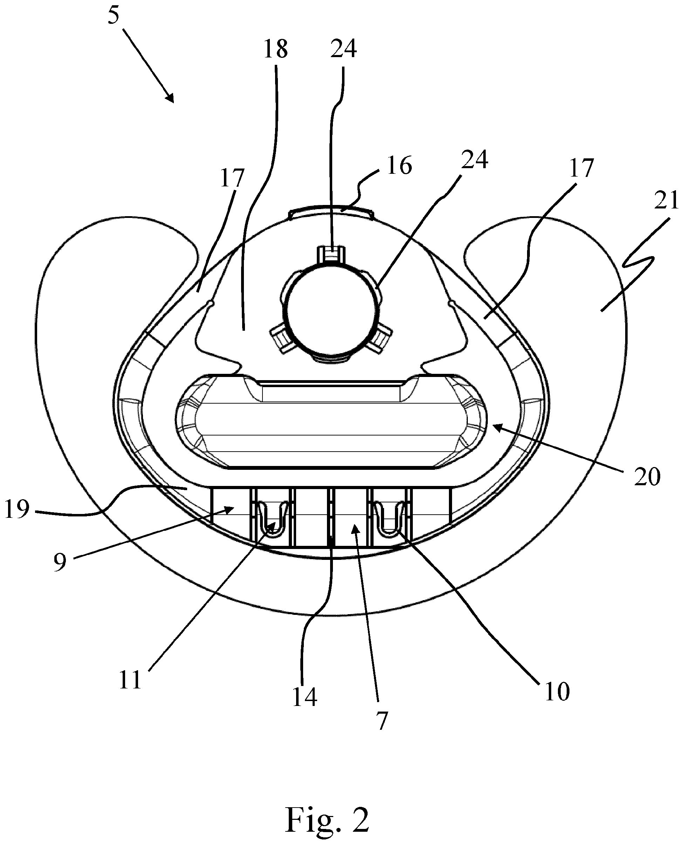

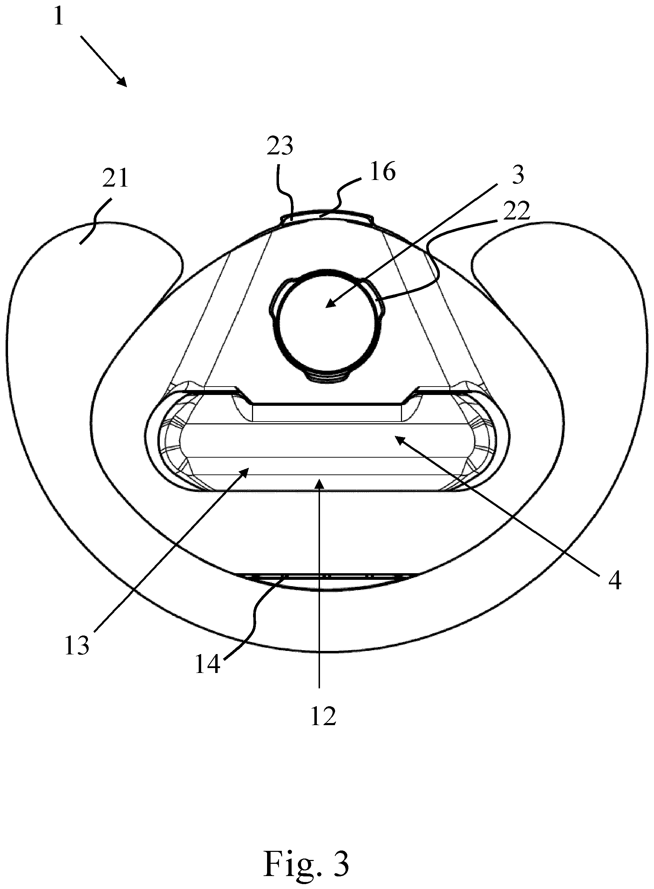

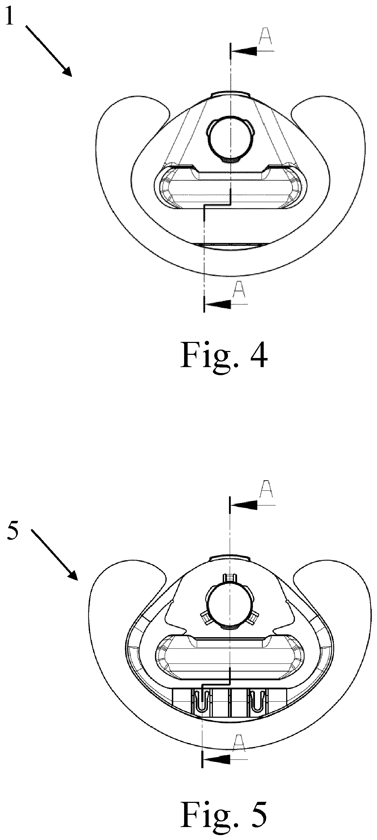

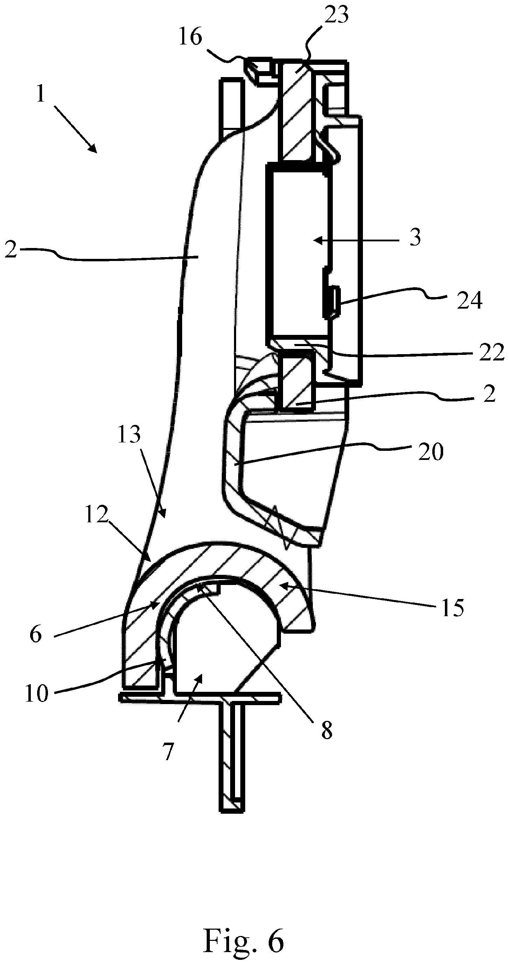

Der in der Figur 1 abgebildete Metallkörper 2 bildet zusammen mit dem in der Figur 2 abgebildeten Passstück 5 den in Figur 3 abgebildeten Umlenker 1. Der Metallkörper 2 und das Passstück 5 liegen dabei in mehreren Bereichen aneinander, wie aus der in Figur 6 dargestellten Schnittdarstellung gemäß Figur 4 entnehmbar ist. Das Passstück 5 greift mit dem Gurtabschnitt 20 in den Gurtschlitz 4 ein. Weiterhin greift das Passstück 5 im Bereich der Befestigungsöffnung 3 in den Metallkörper 2 ein, wobei die drei weiteren Klipphaken 22 des Passstückes 5 in die Befestigungsöffnung 3 des Metallkörpers 2 eingreifen. Die zusätzliche Verbindung über den Klipphaken 16 an dem Klippvorsprung 23 hält das Passstück 5 und den Metallkörper 2 zusätzlich zusammen.

Die Verbindung des Metallkörpers 2 und des Passstücks 5 zu dem Umlenker 1 erfolgt zudem über das Eingreifen des Eingriffsabschnittes 7 in die Aufnahme 6. Dabei weist die Eingriffsoberfläche 9 die fünf vorstehenden Eingriffsrippen 14 auf, sodass die Eingriffsrippen 14 an der Aufnahmeinnenfläche 8 der Aufnahme 6 des Metallkörpers 2 anliegen. Die Aufnahme 6 ist dabei durch einen Rollabschnitt 15 des Metallkörpers gebildet. Vorteilhaft kann der als Metallstanzteil ausgebildete Metallkörper 2 bei dessen Fertigung gebogen beziehungsweise gerollt werden, sodass die Aufnahme 6 mit der Aufnahmeinnenfläche 8 nach innen gekrümmt ist. Weiterhin wird auf der der Aufnahmeinnenfläche gegenüberliegenden Oberfläche 12 des Metallkörpers 2 im Bereich des Gurtschlitzes 4 eine Gurtauflagefläche 13 bereitgestellt. Gleichzeitig begrenzt die Oberfläche 12 beziehungsweise die Gurtauflagefläche 13 den Gurtschlitz 4 in eine Richtung. Wie insbesondere der Figur 6 entnehmbar ist, greift vorderseitig das Passstück 5 mit dem Gurtabschnitt 20 ebenfalls im Bereich der Gurtauflagefläche 13 in den Gurtschlitz 4 des Metallkörpers 2 ein, sodass der ein Gurtband vorteilhaft an dem Passstück 5 entlang gleiten kann und ein Abrieb an den scharfkantigen Kanten des Gurtschlitzes 4 vermieden werden kann.

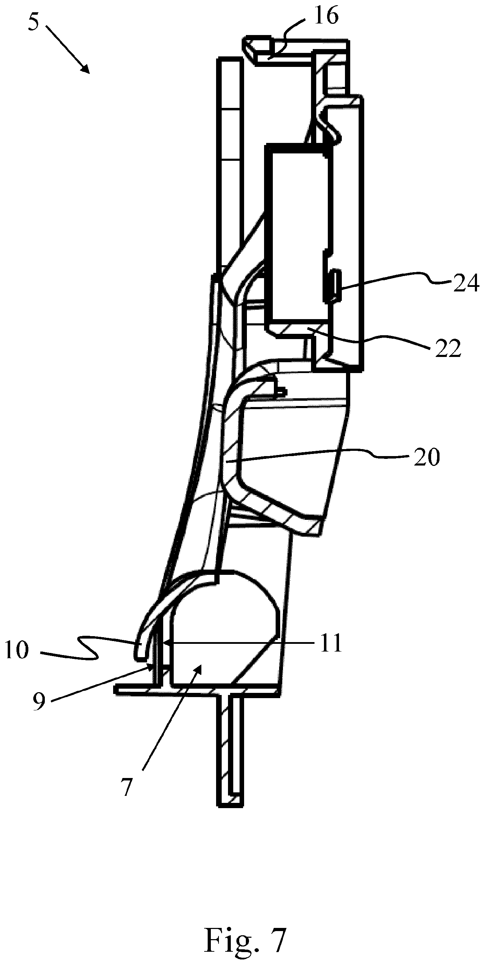

Die zwei von der Eingriffsoberfläche 9 beziehungsweise auch den Eingriffsrippen 14 vorstehenden Federelemente sind gemäß der Figur 7 jeweils in einer Öffnung 11 angeordnet. Wird das Passstück 5 mit dem Metallkörper 2 zu dem Umlenker 1 verbunden, drücken die Federelemente 10 gegen die Aufnahmeinnenfläche 8 der Aufnahme 6 und können vorteilhaft Unebenheiten oder einen Versatz des Rollabschnittes 15 des Metallkörpers 2 ausgleichen und ein Verkanten bei der Montage verhindert werden. Wie insbesondere in Figur 6 erkennbar ist, stehen die Federelemente 10 mit der Aufnahmeinnenfläche 8 in Kontakt. Die Aufnahmeinnenfläche 8 liegt zudem an den fünf die Kontur der Aufnahmeinnenfläche 8 nachbildenden Eingriffsrippen 14 an. Die Federelemente 10 fluchten, wie insbesondere in Figur 6 erkennbar ist, mit den Eingriffsrippen 14, welche die Eingriffsoberfläche 9 abschnittsweise bilden. Die Federelemente 10 des Umlenkers 1 sind in diesem Fall maximal in Richtung des Inneren des Eingriffsabschnittes 7 eingelenkt, wobei die Federelemente 10 zum Teil in der entsprechenden Öffnung 11 angeordnet sind.

Kommt es nunmehr zu einem Anschlagen des Passstückes 5 an dem Metallkörper 2, werden Klappergeräusche durch die Spannkraft der Federelemente 10 verhindert. Weiterhin kann durch die zwei versetzt angeordneten Federelemente 10 ein einseitig unkontrolliertes Anschlagen oder Auseinanderbewegen der Metallkörpers 2 und des Passstückes 5 unterbunden werden. Entfernen sich beispielsweise durch ein Auseinanderbewegen des Metallkörpers 2 und des Passstückes 5, auf der in Figur 2 rechten Seite, die Aufnahmeinnenfläche 8 von den Eingriffsrippen 14, kann das rechte Federelement 10 entsprechend Auslenken und weiterhin an der Aufnahmeinnenfläche 8 anliegen, sodass weiterhin eine Spannkraft bereitgestellt wird. Gleiches gilt, wenn die durch den Rollabschnitt 15 ausgebildete Aufnahme 6 eine unregelmäßig geformte Aufnahmeinnenfläche 8 aufweist.

### Bezugszeichenliste

- 1: Umlenker
- 2: Metallkörper
- 3: Befestigungsöffnung
- 4: Gurtschlitz
- 5: Passstück
- 6: Aufnahme
- 7: Eingriffsabschnitt
- 8: Aufnahmeinnenfläche
- 9: Eingriffsoberfläche
- 10: Federelement
- 11: Öffnung
- 12: Oberfläche
- 13: Gurtauflagefläche
- 14: Eingriffsrippen
- 15: Rollabschnitt
- 16: Klipphaken
- 17: Verbindungsarme
- 18: oberer Abschnitt
- 19: unterer Abschnitt
- 20: Gurtabschnitt
- 21: Verkleidungskontur
- 22: weitere Klipphaken
- 23: Klippvorsprung
- 24: Abstützelemente

## Patentansprüche

1. Umlenker (1) zur Führung eines Gurtbandes in einem Fahrzeug, zumindest aufweisend:
- einen Metallkörper (2) mit einer am Fahrzeug anbringbaren Befestigungsöffnung (3) und mit einem Gurtschlitz (4), und
- ein mit dem Metallkörper (2) verbundenes Passstück (5) aus Kunststoff,
• wobei der Metallkörper (2) eine Aufnahme (6) aufweist und auf dem Passstück (5) ein zu der Aufnahme (6) korrespondierender Eingriffsabschnitt (7) ausgebildet ist, sodass der Eingriffsabschnitt (7) in die Aufnahme (6) eingreift, und
• wobei die Aufnahme (6) eine dem Eingriffsabschnitt (7) zugewandte Aufnahmeinnenfläche (8) aufweist und der Eingriffsabschnitt (7) eine der Aufnahme (6) zugewandte Eingriffsoberfläche (9) aufweist, **dadurch gekennzeichnet, dass**
der Eingriffsabschnitt (7) mindestens ein an der Aufnahmeinnenfläche (8) anliegendes Federelement (10) aufweist, wobei das mindestens eine Federelement (10) unter Spannung steht und gegen die Aufnahmeinnenfläche (8) drückt.

2. Umlenker (1) nach Anspruch 1, wobei das mindestens eine Federelement (10) eine gegen die Aufnahmeinnenfläche (8) wirkende Federkraft bereitstellt.

3. Umlenker (1) nach wenigstens einem der vorhergehenden Ansprüche, wobei das mindestens eine Federelement (10) einteilig mit dem Passstück (5) ausgebildet ist.

4. Umlenker (1) nach wenigstens einem der vorhergehenden Ansprüche, wobei das Passstück (5) mindestens zwei und entlang des Gurtschlitzes (4) versetzte Federelemente (10) aufweist, sodass mindestens an zwei versetzten Stellen eine Federkraft auf die Aufnahmeinnenfläche (8) bereitstellbar ist.

5. Umlenker (1) nach wenigstens einem der vorhergehenden Ansprüche, wobei die Eingriffsoberfläche (9) mindestens eine Öffnung (11) aufweist und das mindestens eine Federelement (10) zumindest zum Teil in der Öffnung (11) angeordnet ist.

6. Umlenker (1) nach Anspruch 5, wobei das mindestens eine Federelement (10) in Richtung der Aufnahmeinnenfläche (8) auslenkbar ist und in Richtung der mindestens einen Öffnung (11) einlenkbar ist.

7. Umlenker (1) nach wenigstens einem der vorhergehenden Ansprüche, wobei eine der Aufnahmeinnenfläche (8) abgewandten Oberfläche (12) des Metallkörpers (2) eine den Gurtschlitz (4) begrenzende Gurtauflagefläche (13) bildet.

8. Umlenker (1) nach wenigstens einem der vorhergehenden Ansprüche, wobei durch die Eingriffsoberfläche (9) mindestens zwei Eingriffsrippen (14) ausgebildet sind, wobei die mindestens zwei Eingriffsrippen (14) eine Kontur der Aufnahmeinnenfläche (8) nachbilden, sodass die mindestens zwei Eingriffsrippen (14) an die Aufnahmeinnenfläche (8) angelegt sind.

9. Umlenker (1) nach wenigstens einem der vorhergehenden Ansprüche, wobei die Aufnahme (6) durch einen sich in Richtung des Gurtschlitzes (4) erstreckenden Rollabschnitt (15) ausgebildet ist.

10. Umlenker (1) nach wenigstens einem der vorhergehenden Ansprüche, wobei die maximale Auslenkung des mindestens einen Federelements (10) durch die Eingriffsoberfläche (9) und/oder durch die Eingriffsrippen (14) vorgegeben ist.

## Claims

1. A deflector (1) for guiding a belt strap in a vehicle, at least comprising:
- a metal body (2) having a fastening opening (3) which can be attached to the vehicle and has a belt slot (4), and
- an adapter (5) which is made of plastics material and is connected to the metal body (2),
• the metal body (2) comprising a receptacle (6), and an engagement portion (7) corresponding to the receptacle (6) being formed on the adapter (5) so that the engagement portion (7) engages in the receptacle (6), and
• the receptacle (6) having a receptacle inner surface (8) facing the engagement portion (7) and the engagement portion (7) having an engagement surface (9) facing the receptacle (6), **characterized in that**
the engagement portion (7) has at least one spring element (10) bearing against the receptacle inner surface (8), the at least one spring element (10) being under tension and pressing against the receptacle inner surface (8).

2. The deflector (1) according to claim 1, wherein the at least one spring element (10) provides a spring force acting against the receptacle inner surface (8).

3. The deflector (1) according to at least one of the preceding claims,
wherein the at least one spring element (10) is formed in one piece with the adapter (5).

4. The deflector (1) according to at least one of the preceding claims,
wherein the adapter (5) comprises at least two spring elements (10) offset along the belt slot (4), so that a spring force can be provided on the receptacle inner surface (8) at least at two offset locations.

5. The deflector (1) according to at least one of the preceding claims,
wherein the engagement surface (9) comprises at least one opening (11) and the at least one spring element (10) is arranged at least partially in the opening (11).

6. The deflector (1) according to claim 5, wherein the at least one spring element (10) can be deflected in the direction of the receptacle inner surface (8) and can be turned in the direction of the at least one opening (11).

7. The deflector (1) according to at least one of the preceding claims,
wherein a surface (12) of the metal body (2) that faces away from the receptacle inner surface (8) forms a belt contact surface (13) which delimits the belt slot (4).

8. The deflector (1) according to at least one of the preceding claims,
wherein at least two engagement ribs (14) are formed by the engagement surface (9), wherein the at least two engagement ribs (14) reproduce a contour of the receptacle inner surface (8) so that the at least two engagement ribs (14) bear against the receptacle inner surface (8).

9. The deflector (1) according to at least one of the preceding claims,
wherein the receptacle (6) is formed by a rolling portion (15) extending in the direction of the belt slot (4).

10. The deflector (1) according to at least one of the preceding claims,
wherein the maximum deflection of the at least one spring element (10) is predetermined by the engagement surface (9) and/or by the engagement ribs (14).

## Revendications

1. Déflecteur (1) pour le guidage d'une ceinture dans un véhicule, présentant au moins :
- un corps métallique (2) comportant une ouverture de fixation (3) pouvant être montée sur le véhicule et comportant une fente pour ceinture (4) et
- une pièce d'ajustement (5) en plastique reliée au corps métallique (2),
• dans lequel le corps métallique (2) présente un logement (6) et, sur la pièce d'ajustement (5) une section de mise en prise (7) correspondant au logement (6) est formée, de sorte que la section de mise en prise (7) vienne en prise dans le logement (6) et
• dans lequel le logement (6) présente une surface interne de logement (8) tournée vers la section de mise en prise (7) et la section de mise en prise (7) présente une surface de mise en prise (9) tournée vers le logement (6),
**caractérisé en ce que**
la section de mise en prise (7) présente au moins un élément de ressort (10) situé sur la surface interne de logement (8), dans lequel l'au moins un élément de ressort (10) est sous tension et appuie contre la surface interne de logement (8).

2. Déflecteur (1) selon la revendication 1, dans lequel l'au moins un élément de ressort (10) fournit une force de ressort agissant contre la surface interne de logement (8).

3. Déflecteur (1) selon au moins l'une des revendications précédentes,
dans lequel l'au moins un élément de ressort (10) est formé d'un seul tenant avec la pièce d'ajustement (5).

4. Déflecteur (1) selon au moins l'une des revendications précédentes,
dans lequel la pièce d'ajustement (5) présente au moins deux éléments de ressort (10) décalés le long de la fente pour ceinture (4), de sorte qu'une force de ressort peut être fournie au moins à deux endroits décalés sur la surface interne de logement (8).

5. Déflecteur (1) selon au moins l'une des revendications précédentes,
dans lequel la surface de mise en prise (9) présente au moins une ouverture (11) et l'au moins un élément de ressort (10) est agencé au moins en partie dans l'ouverture (11).

6. Déflecteur (1) selon la revendication 5, dans lequel l'au moins un élément de ressort (10) peut être dévié en direction de la surface interne de logement (8) et peut être dirigé en direction de l'au moins une ouverture (11).

7. Déflecteur (1) selon au moins l'une des revendications précédentes,
dans lequel une surface (12) du corps métallique (2) à l'opposé de la surface interne de logement (8) forme une surface d'appui de ceinture (13) délimitant la fente pour ceinture (4).

8. Déflecteur (1) selon au moins l'une des revendications précédentes,
dans lequel au moins deux nervures de mise en prise (14) sont formées par la surface de mise en prise (9), dans lequel les au moins deux nervures de mise en prise (14) reproduisent un contour de la surface interne de logement (8), de sorte que les au moins deux nervures de mise en prise(14) sont placées sur la surface interne de logement (8).

9. Déflecteur (1) selon au moins l'une des revendications précédentes,
dans lequel le logement (6) est formé par une section de roulement (15) s'étendant en direction de la fente pour ceinture (4).

10. Déflecteur (1) selon au moins l'une des revendications précédentes,
dans lequel la déviation maximale de l'au moins un élément de ressort (10) est définie par la surface de mise en prise (9) et/ou par les nervures de mise en prise (14).
